# EUROPEAN PATENT APPLICATION

(11) **EP 4 560 460 A1**
(43) Date of publication of application: **28.05.2025**
(21) Application number: 23212297.8
(22) Date of filing: 27.11.2023
(51) Int. Cl.: G06F 8/60, G06N 3/00, G06N 20/00, H04L 67/00

(54) **A METHOD FOR OPERATING AN INDUSTRIAL ENVIRONMENT, COMPUTER PROGRAM PRODUCT, COMPUTER-READABLE STORAGE MEDIUM, AS WELL AS OPERATION SYSTEM**

(71) Applicant: Siemens Aktiengesellschaft, 80333 München (DE)
(72) Inventor: Wu, Zhiliang, 81379 München (DE); Buggenthin, Felix, 82205 Gilching (DE); Spieckermann, Sigurd, 85630 Neukeferloh (DE)
(74) Representative: Siemens Patent Attorneys

(57) **Abstract**

The invention relates to a method for operating an industrial environment (12) by an operation system (10), comprising the steps of: providing at least a first computer implemented application (14) in the industrial environment (12); providing an electronic computing device (24) of the operation system (10) for managing at least the first computer implemented application (14); receiving an infrastructure as code (28) source code from an input device (22) of the operation system (10) by the electronic computing device (24); and adapting at least the first computer implemented application (14) depending on the received infrastructure as code (28) by the electronic computing device (24). Furthermore, the present invention relates to a computer program product, a computer-readable storage medium, as well as an operation system (10).

## Description

The present invention relates to a method for operating an industrial environment by an operation system according to the pending claim 1. Furthermore, the present invention relates to a computer program product, a computer-readable storage medium, as well as to an operation system.

An artificial intelligence development lifecycle, also called MLOps, covers the whole process of a developing of machine learning (ML) models. This includes the computational resource initialization, source code preparation for model training, data collection, data pre-processing, model training, model evaluation, model deployment, model performance monitoring, computational resource destruction and furthermore. A proper artificial intelligence development setup is crucial especially for industrial-grade artificial intelligence offerings, as a customer may face expensive downtimes or even regulatory issues should an artificial intelligence solution not work as expected. Furthermore, the correct setup for an artificial intelligence-based solution requires special expertise that not all the customers may have.

In more detail, different from developing on one several personal computer (PC) using some public datasets, industrial-grade artificial intelligence development involves more industrial-specific hardware, such as industrial PCs or furthermore. The industrial-specific hardware could locate at various places, ranging from automated factories for digital industries to battery charging stations for smart infrastructure. With the rise of internet of things (IoT), industrial companies have begun to offer the industrial-specific hardware in cloud settings, facilitating their access and management from the internet. Meanwhile, the configuration of these cloud-based industrial-specific hardware remains complex and even tedious, including periodic token generation for permission management, network configuration within various industrial-specific network environment, industrial PC specification for machine learning model training and inference, camera configuration settings. Currently, most of these configurations are done manually through either command line or some isolated scripts. To update certain settings, many of these manual steps must be executed from scratch again.

According to the state of the art, the configuration of industrial hardware remains to be manual in most cases. Usually, they would offer some user interface (UI) to click through the configurations for different purposes.

For the artificial intelligence-related development lifecycle, there have been some efforts to automate certain parts of the process, such as artificial intelligence model deployer to deploy a machine learning model to the related industrial hardware using the scripts. Meanwhile, it is only for the machine learning model deployment and the configuration of the hardware remains manual.

It is an object of the present invention to provide a method, a computer program product, a computer-readable storage medium, as well as an operation system, by which an automated artificial intelligence development lifecycle may be provided.

This object is solved by a method, a corresponding computer program product, a corresponding computer-readable storage medium, as well as a corresponding operation system. Advantageous embodiments are presented in the dependent claims.

One aspect of the invention relates to a method for operating an industrial environment by an operation system. At least a first computer-implemented application in the industrial environment is provided. An electronic computing device of the operation system is provided for managing at least the first computer-implemented application. An infrastructure as code source code is received from an input device of the operation system by the electronic computing device. At least the first computer-implemented application is adapted depending on the received infrastructure as code by the electronic computing device.

Therefore, an automated way for an artificial intelligence development during the lifecycle of the computer-implemented application is provided.

In particular, this invention proposes to automate the manual and tedious configuration process of industrial-grade computer-implemented applications, in particular artificial intelligence applications, by leveraging the idea of infrastructure as code (IaC). Furthermore, a way for templating the configuration of infrastructure as code may be provided, which offers technical advantages including but not limited to the following points. The source code of the infrastructure as code serves as the single source of truth to ensure the reproducibility of the complete computer-implemented application development lifecycle. It is managed using version control systems together with the source code related to other parts of the computer-implemented application development lifecycle. They serve like a bill of material (BOM) for the whole computer-implemented application development lifecycle. All configurations of the industrial hardware for computer-implemented application development lifecycle are created through answering the question prepared in a questionnaire. Updates of the configurations may be realized by offering different answers to the questions prepared in the previous questionnaire.

In particular, the proposed method has the advantage that compared to manual configuration of clicking through a user interface, the infrastructure as a code of industrial devices is much more efficient and time-saving. It ensures full reproducibility and allows to keep track of all the involved components (BOM) that were used to generate the industrial-grade computer-implemented application. This is especially important in light of upcoming regulations like for example European AI (Artificial Intelligence) act or data act.

Compared to some semi-automated script-based methods to deploy models on certain specific hardware, the templated infrastructure as code offers a more holistic solution to cover the whole computer implemented method application development lifecycle, ranging from the computational resource initialization to the final model deployment.

In particular, the industrial environment may comprise at least a second computer-implemented application. Furthermore, the industrial environment may comprise more than two computer-implemented applications. Therefore, the electronic computing device is configured for managing the plurality as well as in particular different computer-implemented applications.

In particular, according to the received infrastructure as code the electronic computing device is configured for generating an operation signal for adapting the at least one computer-implemented application. The operation signal may be transmitted from the electronic computing device to the computer-implemented application for adapting.

According to an embodiment the first computer-implemented application is provided with at least in part an artificial intelligence. The artificial intelligence may be provided in the form of a machine learning algorithm. Furthermore, the artificial intelligence may be provided as a neural network. Therefore, artificial intelligence applications used in the industrial environment may be operated by the operation system. Therefore, in particular, an automated configuration process of the industrial-grade artificial intelligence by leveraging idea of infrastructure as a code is provided.

In another embodiment the first computer-implemented application is provided as an industrial personal computer and/or industrial edge device and/or a programmable logic controller and/or an industrial camera. In particular, this list is not completed. The industrial environment may comprise other computer-implemented applications as well. In particular, therefore for example a fabric shop floor as an industrial environment with the different intelligent applications as mentioned, may be managed by the operation system.

In another embodiment the electronic computing device compares a source code already installed at the first computer-implemented application with the provided infrastructure as code. In particular, the source code in the infrastructure as code is sent to the electronic computing device, which may be also regarded as a so-called industrial device management (IDM), for example an industrial edge management, system. The electronic computing device reads whether the current industrial device settings match the one defined by the source code in the infrastructure as code. If the settings in the industrial devices are the same as specified by the industrial as code, the electronic computing device may not trigger any changes in the managed industrial devices. Otherwise, the electronic computing device may trigger configuration steps automatically to change them to the target values.

In another embodiment depending on the comparison and automated adaption of the respective computer-implemented application of the first computer-implemented application is provided. Therefore, if the comparison fails, an automatic adaption of the first computer-implemented application is provided. Therefore, an automated process for providing the source code for the first computer-implemented application is provided.

In another embodiment a source code of the infrastructure as a code is stored in a version control device of the operation system. In particular, the source code of the infrastructure as code is saved in the version control device, which may also be regarded as a version control system (VCS), and is used to ensure the reproducibility when one needs to reproduce the same setup in the future.

In another embodiment current settings of the first computer-implemented application are transmitted to the electronic computing device and the electronic computing device compares the current settings with the infrastructure as code. For example, when one wants to update the settings for the industrial devices, they can update the source code for the infrastructure as code and send it to the industrial device management, in particular the electronic computing device. In particular, in industrial environments such as factory shop.

In another embodiment depending on the comparison of the infrastructure as code is updated by the electronic computing device. In particular, in industrial environments such as factory shop floors, sometimes the workers may have to update the device setting manually to fix some problems. For such scenarios, a checking job can be set up in the version control device to periodically check whether the device settings match the source code in the infrastructure as code. If not, a merge request may be created automatically to reflect the changes in the source code. Reasonable changes may be integrated in the new version of the source code of the infrastructure as code.

In another embodiment a template is provided for providing the infrastructure as code by the input device. In particular, the source code in infrastructure as code usually follows a similar routine but differs itself in detail. For example, the source code for different branches may follow a very similar structure but with different configurations of industrial hardware. Preparing it from scratch is a repetitive procedure and requires relative little customization. In addition, due to flexibility of the syntax in infrastructure as code, how one organizes the source code is subject to developers. Based on these observations, a code template to standardize the whole workflow is provided. With that, one can quickly generate starter code by answering for example questions prepared in the code template.

In another embodiment the template is provided as a questionnaire for a person. Therefore, depending on the questions asked in the questionnaire the infrastructure as code can be automatically determined by the input device/electronic computing device.

In another embodiment the questionnaire queries at least a name of a project and/or a version of the underline source code and/or a stage of an artificial intelligence deployment. In particular, in order to generate starter code by answering the questions prepared to the code templates, such as the name of the project, version of the underline package, stage of the artificial intelligence development. Furthermore, the template can be provided in an easy way. In addition, one can also update the generated starter code by offering different answers to the same questionnaire.

In another embodiment the industrial environment is provided as a factory shop floor. In particular, with a factory shop floor different products can be produced. In particular, the factory shop floor may comprise different computer-implemented applications. Therefore, the operation system is configured for operating the factory shop floor.

In particular, the method is a computer-implemented method. Therefore, another aspect of the invention relates to a computer program product comprising program code means for performing a method according to the preceding aspect.

Another aspect of the invention relates to a computer-readable storage medium comprising at least the computer program product according to the preceding aspect.

A still further aspect of the invention relates to an operation system for operating an industrial environment, comprising at least one electronic computing device and one input device, wherein the operation system is configured for performing a method according to the preceding aspect. In particular, the method is performed by the operation system.

Advantageous embodiments of the method are to be regarded as advantageous embodiments of the computer program product, the computer-readable storage medium, as well as the operation system. The operation system therefore comprises means for performing the method according to the preceding aspect.

A software module may be understood as a portion of software code functionally connected and combined to a unit. A software module may comprise or implement several processing steps and/or data structures. A method step of providing a software module may be understood to comprise providing a respective software code in a computer readable fashion on a computer readable storage medium.

An artificial neural network can be understood as a software code or a compilation of several software code components, wherein the software code may comprise several software modules for different functions, for example one or more encoder modules and one or more decoder modules.

An artificial neural network can be understood as a nonlinear model or algorithm that maps an input to an output, wherein the input is given by an input feature vector or an input sequence and the output may be an output category for a classification task or a predicted sequence.

For example, the artificial neural network may be provided in a computer-readable way, for example, stored on a storage medium of the vehicle, in particular of the at least one computing unit.

The neural network comprises several modules including the encoder module and the at least one decoder module. These modules may be understood as software modules or respective parts of the neural network. A software module may be understood as software code functionally connected and combined to a unit. A software module may comprise or implement several processing steps and/or data structures.

The modules may, in particular, represent neural networks or sub-networks themselves. If not stated otherwise, a module of the neural network may be understood as a trainable and, in particular, trained module of the neural network. For example, the neural network and thus all of its trainable modules may be trained in an end-to-end fashion before the method is carried out. However, in other implementations, different modules may be trained or pre-trained individually. In other words, the method according to the invention corresponds to a deployment phase of the neural network.

A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figures and their description as well as the claims. In particular, further implementations of the invention may not necessarily contain all features of one of the claims. Further implementations of the inventions may comprise features or combinations of features, which are not recited in the claims.

Therefore the drawings show in:
FIG 1 a schematic block diagram according to an embodiment of an operation system;
FIG 2 a schematic flow chart according to an embodiment of a method; and
FIG 3 another schematic block diagram according to an embodiment of an operation system.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

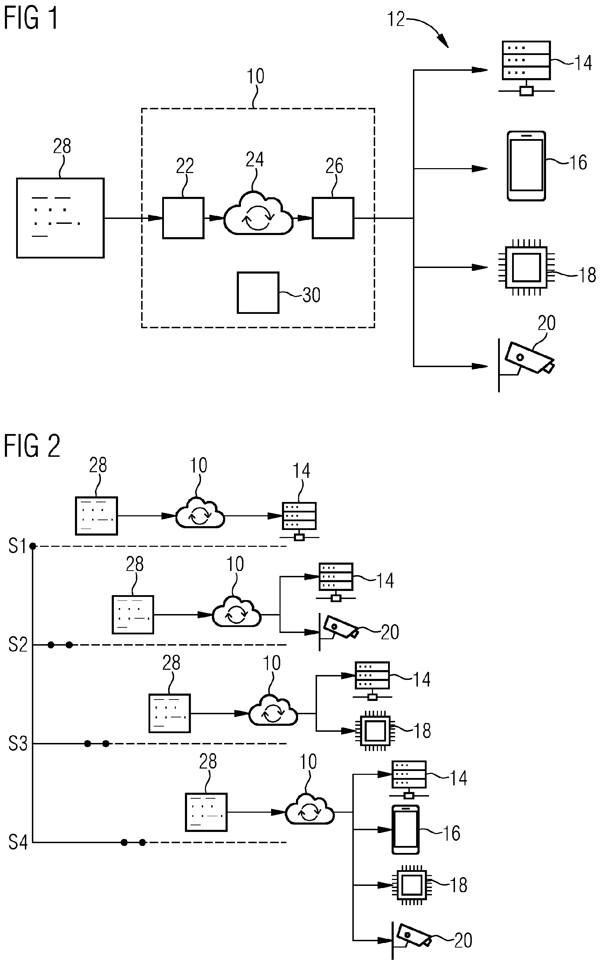

FIG 1 shows a schematic block diagram according to an embodiment of an operation system 10. The operation system 10 is for operating an industrial environment 12. The industrial environment 12 comprises at least a first computer-implemented application 14. According to the shown embodiment a second computer-implemented application 16, a third computer-implemented application 18 as well as a fourth computer-implemented application 20 are shown.

The operation system 10 comprises at least one input device 22, one electronic computing device 24 as well as one transmitting device 26.

According to the shown embodiment the operation system 10 is shown, which is configured for operating the industrial environment 12. At least the first computer-implemented application 14 in the industrial environment 12 is provided. The electronic computing device 24 is provided for managing at least the first computer-implemented application 14. An infrastructure as code 28 source code is received from the input device 22 of the operation system 10 by the electronic computing device 24. At least the first computer-implemented application 14 is adapted depending on the received infrastructure as code 28 by the electronic computing device.

In particular, the first computer-implemented application 14 may be provided with at least in part an artificial intelligence, for example a machine learning model or a neural network. Furthermore, the first computer-implemented application 14 may be provided as industrial personal computer and/or an industrial edge device and/or a programmable logic controller and/or industrial camera.

According to an embodiment the electronic computing device 24 compares a source code already installed at the first computer-implemented application 14 with the provided infrastructure as code 28. Therefore, depending on the comparison and automatic adaption of the first computer-implemented application 14 is provided.

Furthermore, a source code of the industrial as a code 28 is stored in a version control device 30 of the operation system. Furthermore, current settings of the first computer-implemented application 14 are transmitted to the electronic computing device 24 and the electronic computing device 24 compares the current settings with the infrastructure as code 28. Depending on the comparison the infrastructure as code 28 is updated by the electronic computing device 24.

According to the shown embodiment the idea is to replace the manual configuration by an interactive user interface with an automated process through machine readable files that are preconfigured for the scenario at hand in particular as the infrastructure as code 28.

As shown in FIG 1, the source code in the infrastructure as code 28 is sent to the electronic computing device 24, which may be also regarded to as industrial device management (IDM) system, which reads whether the current industrial device settings match the one defined by the source code in the infrastructure as code 28. If the settings in industrial devices are the same as specified by infrastructure as code 28, the electronic computing device 24 may not trigger any changes in the managed industrial devices. Otherwise, it may trigger configuration steps automatically to change them to the target values. To enable infrastructure as code 28, the electronic computing device 24 in their middle may provide application program interfaces (API), which offer similar or even more functionalities that one can configure through clicking in the user interface.

The configured infrastructure can then be used to develop for example artificial intelligence models for the following development lifecycle. The source code of the infrastructure as code 28 is saved in the version control device 30 and may be used to ensure the reproducibility when one needs to reproduce the same setup in the future. When one wants to update the settings for the industrial devices, they can update the source code for infrastructure as code 28 and send it to the industrial device management, in particular the electronic computing device 24.

In industrial environments 12 such as factory shop floors, sometimes the workers have to update the device setting manually to fix some problems. For such scenarios, a checking job can be setup in the version control device 30 to periodically check whether the device settings match the source code in the infrastructure as code 28. If not, a merge request may be created automatically to reflect the changes in the source code. Reasonable changes may be integrated in the new version of the source code of the infrastructure as code 28.

FIG 2 shows a flow chart according to an embodiment of the method. In particular a flow chart for the industrial infrastructure as code 28 for the artificial intelligence development lifecycle is shown. In particular FIG 2 shows four steps for the development lifecycle. Therefore, FIG 2 shows a holistic overview within a version control device 30.

The artificial intelligence development starts with a first step S1, which builds the basis of the operation system 10. In a second step S2 the artificial intelligence development starts with collecting training data with the industrial hardware provisioned by infrastructure as code 28. Since machine learning models are highly dependent on the training data, settings in the infrastructure as code 28 could be viewed as hyperparameters to iteratively improve the model performance in the whole development lifecycle.

In the infrastructure as code 28 a data collection phase is committed to the data collection branch. For machine learning model training with collected data from the previous phase, more powerful industrial hardware might be required. Another parallel branch model training, which is shown in the third step S3, could be used to save the respective setting in the infrastructure as code 28. Afterwards, the trained machine learning model may be deployed in a fourth step S4 to respective industrial hardware to serve certain functionalities. The settings of the deployed hardware are saved in the model deploy branch. Such a setup may enable the reproducibility of all different phases of the industrial-grade artificial intelligence development lifecycle.

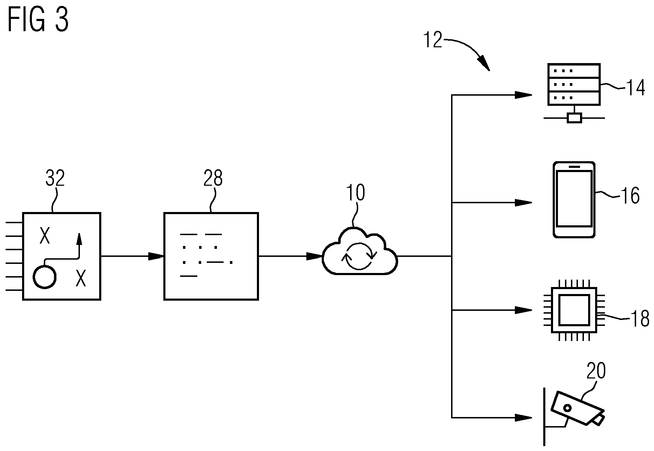

FIG 3 shows another embodiment of an operation system 10. In particular FIG 3 shows, that a template 32 may be provided for providing the infrastructure as code 28 by the input device 22. The template 32 may be provided as a questionnaire for a person. The questionnaire queries at least a name of a project and/or a version of the underlined source code and/or a stage of an artificial intelligence deployment.

In particular, source code in infrastructure as code 28 usually follows a similar routine but differs itself in detail. For example, the source code for different branches of the FIG 2 may follow a very similar structure but with different configurations of industrial hardware. Preparing it from scratch is a repetitive procedure and requires relatively little customization. In addition, due to the flexibility of the syntax in infrastructure as code 28, how one organizes source code is subject to developers. Based on these observations, it is further proposed to involve the templates 32 to standardize the whole workflow. With that, one can quickly generate starter code by answering the questions prepared in the code template 32, such as the name of the project, versions of the underline package, stage of the artificial intelligence development and furthermore. In addition, one can also update the generated starter code by offering different answers to the same questionnaire.

Therefore, in particular, FIG 3 depicts a proposed workflow to automate the industrial-grade artificial intelligence development lifecycle with infrastructure as code 28 in templating. At the very beginning of an artificial intelligence project, one starts by generating the source code for infrastructure as code 28 by first answering various configuration questions prepared in the code templates 32. With the generated source code, one pushes it to the electronic computing device 24. The electronic computing device 24 compares the setting in infrastructure as code 28 with its managed devices and creates the industrial edge devices accordingly. After that, one moves to develop the machine learning models using the provisioned industrial devices, which applies for phases including data collection, model training, and model deployment. Both their source code for infrastructure as code 28 as well as the code for the artificial intelligence development are tracked by some source code in particular with the version control device 30. When changes are necessary regarding the industrial devices, one updates the source code of infrastructure as code 28 by re-answering the questionnaires in the code template 32 and gets a new version source code for the infrastructure as code 28. The source code is submitted to the electronic computing device 24, which compares the newly specified settings with the saved state and provision the industrial devices accordingly. One can continue to develop the artificial intelligence models using the newly provisioned industrial devices. Such update mechanism repeats itself until the whole artificial intelligence development is completed. The final source code for the infrastructure as code 28, data processing, model training, evaluation, and deployment in the version control device 30 may be deliverables used to reproduce the same solution in the project.

## Claims

1. A method for operating an industrial environment (12) by an operation system (10), comprising the steps of:
- providing at least a first computer implemented application (14) in the industrial environment (12);
- providing an electronic computing device (24) of the operation system (10) for managing at least the first computer implemented application (14);
- receiving an infrastructure as code (28) source code from an input device (22) of the operation system (10) by the electronic computing device (24); and
- adapting at least the first computer implemented application (14) depending on the received infrastructure as code (28) by the electronic computing device (24).

2. A method according to claim 1, **characterized in that** the first computer implemented application (14) is provided with at least in part an artificial intelligence.

3. A method according to claim 1 or 2, **characterized in that** the first computer implemented application (14) is provided as an industrial personal computer and/or an industrial edge device and/or a programmable logic controller and/or an industrial camera.

4. A method according to any one of claims 1 to 3, **characterized in that**
the electronic computing device (24) compares a source code already installed at the first computer implemented application (14) with the provided infrastructure as code (28).

5. A method according to claim 4, **characterized in that** depending on the comparison an automatic adaption of the first computer implemented application (14) is provided.

6. A method according to any one of claims 1 to 5, **characterized in that**
the source code of the infrastructure as code (28) is stored in a version control device (30) of the operation system (10).

7. A method according to any one of claims 1 to 6, **characterized in that**
current settings of the first computer implemented application (14) are transmitted to the electronic computing device (24) and the electronic computing device (24) compares the current settings with the infrastructure as code (28).

8. A method according to claim 7, **characterized in that** depending on the comparison the infrastructure as code (28) is updated by the electronic computing device (24).

9. A method according to any one of claims 1 to 8, **characterized in that**
a template (32) is provided for providing the infrastructure as code (28) by the input device (22).

10. A method according claim 9, **characterized in that** the template (32) is provided as a questionnaire for a person.

11. A method according claim 10, **characterized in that** the questionnaire queries at least a name of a project and/or a version of the underlying data package and/or a stage of an artificial intelligence deployment.

12. A method according to any one of claims 1 to 8, **characterized in that**
the industrial environment (12) is provided as a factory shop floor.

13. A computer program product comprising program code means for performing a method according to any one of claims 1 to 12.

14. A computer-readable storage medium comprising at least the computer program product according to claim 13.

15. An operation system (10) for operating an industrial environment (12), comprising at least one electronic computing device (24), and one input device (22), wherein the operation system (10) is configured for performing a method according to any one of claims 1 to 12.
